(19) Europäisches Patentamt

European Patent Office

Office européen des brevets

(11) EP 2 608 997 B1

(12) FASCICULE DE BREVET EUROPEEN

(45) Date de publication et mention
de la délivrance du brevet:
**25.12.2013 Bulletin 2013/52**

(21) Numéro de dépôt: **11741576.0**

(22) Date de dépôt: **11.08.2011**

(51) Int Cl.:
***B62D 57/032*** (2006.01)

(86) Numéro de dépôt international:
**PCT/EP2011/063801**

(87) Numéro de publication internationale:
**WO 2012/025387 (01.03.2012 Gazette 2012/09)**

(54) **ROBOT HUMANOIDE DOTE DE CAPACITES DE GESTION DE CHUTES ET METHODE DE GESTION DESDITES CHUTES**

HUMANOIDER ROBOTER MIT STURZHANDHABUNGSFUNKTION UND VERFAHREN ZUR STURZHANDHABUNG

HUMANOID ROBOT HAVING FALL-MANAGEMENT CAPABILITIES, AND METHOD FOR MANAGING SAID FALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.08.2010 FR 1056798**

(43) Date de publication de la demande:
**03.07.2013 Bulletin 2013/27**

(73) Titulaire: **Aldebaran Robotics S.A.**
**75014 Paris (FR)**

(72) Inventeur: **GOUAILLIER, David**
**F-92120 Montrouge (FR)**

(74) Mandataire: **Nguyen Van Yen, Christian**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2005 234 593    US-A1- 2007 016 329**

• **FUJIWARA K ET AL: "UKEMI: failing motion control to minimize damage to biped humanoid robot", PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002; [IEEE/RSJ INTERNATIONAL CONFERENCE ON INTELLIGENT ROBOTS AND SYSTEMS], NEW YORK, NY : IEEE, US, vol. 3, 30 septembre 2002 (2002-09-30), pages 2521-2526, XP010609471, DOI: DOI:10.1109/IRDS. 2002.1041648 ISBN: 978-0-7803-7398-3 cité dans la demande**

**Description**

La présente invention appartient au domaine des robots humanoïdes. Plus précisément, elle s'applique à la gestion des chutes dudit robot, celles-ci étant un évènement particulièrement pénalisant pour le développement des usages de ces robots.

Un robot peut être qualifié d'humanoïde à partir du moment où il possède certains attributs de l'apparence et des fonctionnalités de l'homme: une tête, un tronc, deux bras, deux mains, deux jambes, deux pieds...Au-delà de l'apparence, les fonctions qu'un robot humanoïde est capable de remplir vont dépendre de sa capacité à effectuer des mouvements, à parler et à « raisonner ». Des robots humanoïdes sont capables de marcher, de faire des gestes, avec les membres ou avec la tête. La complexité des gestes qu'ils sont capables d'effectuer augmente sans cesse. Les robots restent cependant fragiles, notamment du fait des moteurs de leurs articulations. Cette fragilité est un handicap important pour le développement d'applications dans le grand public. En effet, dans le cadre de ces applications, il est particulièrement dommageable de devoir faire face à des casses ou des pannes dues à des chutes à répétition car il serait nécessaire que les producteurs et distributeurs de robots humanoïdes déploient un service après-vente d'une importance disproportionnée avec les premières ventes, ceci à un coût inacceptable pour les utilisateurs grand public.

Une première stratégie applicable aux robots humanoïdes dotés d'une capacité de marche pour minimiser les risques de chutes est de s'assurer que ladite marche est suffisamment stable. Un moyen largement utilisé pour ce faire est de régler la trajectoire du robot de telle manière que le Zero Moment Point (ZMP) (ie le point sur le sol où le moment de l'axe de gisement et le moment de l'axe d'azimuth sont nuls) soit inclus dans le polygone de sustentation du robot (ie dans le cas d'un robot marcheur, si ce dernier se tient sur un pied, le polygone de sustentation aura la forme de ce pied. S'il se tient sur ses deux pieds, la surface de ce polygone sera celle des deux pieds, plus la surface interpodale.) Cette stratégie n'est cependant pas suffisante pour assurer une stabilité du robot dans toutes conditions, notamment dans les cas où le robot doit progresser sur un terrain accidenté, effectuer des mouvements qui le mettent en limite d'équilibre ou encaisser des chocs provoqués par des tiers.

Les solutions classiques à ce problème utilisent des principes communs consistant à vérifier que la projection du centre de masse du robot sur la surface de progression reste incluse dans le polygone de sustentation du robot puis, en cas de sortie dudit centre de masse dudit polygone, de déterminer la meilleure posture de chute en fonction de l'angle de sortie dudit polygone. Ces solutions fonctionnent correctement dans le cas simple d'un robot statique doté de capteurs permettant de décider sans ambiguïté que le robot est en position de chute. Il n'en est pas de même dans le cas de robots en marche, notamment lorsque lesdits capteurs de détection de chute peuvent confondre un geste normal inclus dans la trajectoire de marche et l'amorce d'une chute. En effet, dans ce cas, des mécanismes de protection contre les chutes seront déclenchés de manière intempestive alors qu'il n'y pas lieu d'interrompre le cours normal des activités du robot.

La présente invention résout ce problème en procurant des moyens permettant de discriminer de manière plus précise les cas où il est véritablement nécessaire de mettre en oeuvre des mécanismes adéquats de protection du robot contre les chutes. Cette discrimination est opérée en définissant un polygone de sustentation virtuel, dérivé du polygone physique en lui ajoutant des points qui sont presque en contact avec la surface de progression.

A cet effet, la présente invention divulgue un robot humanoïde apte à se déplacer sur une surface comprenant au moins un module de détection du contact d'au moins une première extrémité du robot avec ladite surface et un module de calcul de la position du point de projection du centre de masse dudit robot par rapport à un premier polygone de sustentation constitué au moins par ladite au moins une première extrémité, ledit robot étant caractérisé en ce qu'il comprend en outre au moins un module de détection de la proximité d'au moins une deuxième extrémité dudit robot avec ladite surface, et en ce que ledit module de calcul de la position du point de projection du centre de masse dudit robot par rapport à un premier polygone de sustentation est également apte à calculer la position de la projection du centre de masse dudit robot par rapport à un deuxième polygone de sustentation, ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

Avantageusement, le module de détection de la proximité de ladite au moins une deuxième extrémité avec ladite surface reçoit en entrée la position de ladite au moins une deuxième extrémité par rapport à ladite surface, ladite position étant fournie en sortie d'un modèle géométrique du robot comprenant au moins la position dans l'espace de ladite extrémité dans un repère du robot.

Avantageusement, la condition selon laquelle une deuxième extrémité du robot est presqu'en contact avec ladite surface est caractérisée par un seuil de distance choisi en fonction de critères appartenant à un groupe de critères comprenant au moins la taille du robot et le débattement maximal en hauteur de ses membres inférieurs.

Avantageusement, ladite au moins une première extrémité est un des pieds du robot, ledit pied étant doté d'au moins un capteur de force de pression.

Avantageusement, ladite au moins une deuxième extrémité est une des mains du robot.

Avantageusement, le robot de l'invention comprend en outre, en entrée dudit module de calcul de la position du point de projection du centre de masse dudit robot par rapport à un polygone de sustentation, un module de filtrage des postures du robot par comparaison selon un critère prédéfini de distance entre leurs modèles géométriques et les modèles géométriques de postures de référence.

Avantageusement, le robot de l'invention comprend en outre une centrale inertielle qui fournit au module de calcul de la position du point de projection du centre de masse dudit robot un axe vertical dont l'angle avec l'axe reliant le thorax et un des pieds du robot en contact avec le sol fournit un angle de rotation à appliquer à l'axe de projection du centre de masse du robot.

Avantageusement, le robot de l'invention comprend en outre, en sortie dudit module de calcul de la position du point de projection du centre de masse dudit robot par rapport à un polygone de sustentation, un module de contrôle d'un groupe d'actions de protection contre les chutes, une au moins desdites actions étant déclenchée lorsque ledit module de calcul fournit au moins une sortie caractéristique d'un état de chute du robot dans lequel le point du projection de son centre de masse est extérieur au deuxième polygone de sustentation.

Avantageusement, le groupe d'actions de protection comprend au moins la coupure de l'asservissement des articulations des jambes du robot, la mise en posture de protection d'au moins un élément appartenant au groupe comprenant au moins la tête, les bras et le bassin, la coupure des articulations d'au moins un élément appartenant audit groupe.

Avantageusement, ledit module de calcul fournit en outre au module de contrôle du groupe d'actions de protection contre les chutes, pour un état caractéristique d'un état de chute du robot, un angle caractéristique de la direction de chute dans un repère du robot, la valeur dudit angle de chute par rapport à des valeurs de référence choisies déterminant le choix des actions de protection du groupe d'actions de protection contre les chutes à exécuter.

Avantageusement, lorsque l'angle de chute détermine une chute vers l'avant, la mise en posture de protection de la tête est de la placer sensiblement vers l'arrière, la mise en posture de protection des bras est de les placer sensiblement vers l'avant et la mise en posture de protection du bassin est de le fermer.

Avantageusement, lorsque l'angle de chute détermine une chute vers la gauche ou la droite, la mise en posture de protection de la tête est de la placer sensiblement vers l'avant, la mise en posture de protection des bras est de les regrouper sensiblement vers le corps et la mise en posture de protection du bassin est de l'ouvrir.

Avantageusement, lorsque l'angle de chute détermine une chute vers l'arrière, la mise en posture de protection de la tête est de la placer sensiblement vers l'avant, la mise en posture de protection des bras est de les ramener sensiblement vers l'arrière et la mise en posture de protection du bassin est de le fermer.

L'invention divulgue également un procédé de gestion des chutes d'un robot humanoïde apte à se déplacer sur une surface et comprenant au moins un module de détection du contact d'au moins une première extrémité du robot avec ladite surface, ledit procédé comprenant une étape de calcul de la position du point de projection du centre de masse dudit robot par rapport à un premier polygone de sustentation constitué au moins par ladite au moins une première extrémité et étant caractérisé en ce qu'il comprend en outre au moins une étape de détection de la proximité d'au moins une deuxième extrémité dudit robot avec ladite surface et une étape de calcul de la position de la projection du centre de masse dudit robot par rapport à un deuxième polygone de sustentation, ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

L'invention divulgue également un programme d'ordinateur comprenant des instructions de code de programme permettant l'exécution du procédé lorsque le programme est exécuté sur un ordinateur, ledit programme étant adapté pour permettre la gestion des chutes d'un robot humanoïde apte à se déplacer sur une surface et comprenant au moins un module de détection du contact d'au moins une première extrémité du robot avec ladite surface, ledit programme comprenant un module de calcul de la position du point de projection du centre de masse dudit robot par rapport à un premier polygone de sustentation et étant caractérisé en ce qu'il comprend en outre au moins un module d'entrée de données de détection de la proximité d'au moins une deuxième extrémité dudit robot avec ladite surface et un module de calcul de la position de la projection du centre de masse dudit robot par rapport à un deuxième polygone de sustentation, ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

L'algorithme de l'invention présente en outre l'avantage de n'utiliser que des équations du premier degré et d'être en conséquence beaucoup moins gourmande en ressources de calcul au stade de la détection des chutes que les solutions de l'art antérieur.

La solution peut avantageusement être combinée avec un filtrage préalable des postures acceptables qui pourraient être à tord considérées comme des postures de chute, ce qui accroît encore l'efficacité calculatoire de l'invention.

En outre, selon l'invention, on mettra en oeuvre, en cas de détection d'une situation de chute, une solution de protection choisie en fonction de critères particulièrement simples, cette simplicité conduisant également à une efficacité calculatoire qui est indispensable dans le cas de robots humanoïdes multifonctions qui doivent pouvoir garder des ressources disponibles pour l'accomplissement de toutes ces fonctions. On constate également que les modes de gestion de chute de l'invention se combinent particulièrement bien avec les modes de gestion des pannes (pannes moteur, pannes électriques...) dans lesquelles les robots doivent être mis en position de protection.

L'invention sera mieux comprise et ses différentes caractéristiques et avantages ressortiront de la description qui suit de plusieurs exemples de réalisation et de ses figures annexées dont :

- Les figures 1a, 1b, 1c, 1d, 1e et 1f illustrent le principe de calcul de prédiction des chutes d'un robot selon l'art antérieur ;
- La figure 2 est un schéma de principe du calcul d'un mode de gestion des chutes d'un robot selon l'art antérieur ;
- La figure 3 est un schéma illustrant le positionnement de capteurs de contact avec le sol de parties du corps d'un robot humanoïde dans plusieurs modes de réalisation de l'invention ;
- La figure 4 illustre un modèle géométrique direct utilisé pour calculer la position dans plusieurs repères du robot de points caractéristiques du robot dans plusieurs modes de réalisation de l'invention ;
- Les figures 5a, 5b et 5c illustrent le principe de calcul de prédiction des chutes d'un robot dans plusieurs modes de réalisation de l'invention ;
- La figure 6 est un organigramme des traitements à mettre en oeuvre pour déterminer un polygone de sustentation virtuel du robot dans plusieurs modes de réalisation de l'invention ;
- La figure 7 illustre la posture d'un robot humanoïde qui doit être prise en compte pour déterminer de manière pertinente la projection du centre de masse d'un robot humanoïde sur son plan de progression dans plusieurs modes de réalisation de l'invention ;
- La figure 8 est un organigramme des traitements à mettre en oeuvre pour déterminer la projection du centre de masse d'un robot humanoïde sur son plan de progression dans plusieurs modes de réalisation de l'invention ;
- Les figures 9a à 9i illustrent plusieurs postures du robot qui peuvent être filtrées avant de détecter les conditions de réalisation d'une chute du robot dans plusieurs modes de réalisation de l'invention ;
- La figure 10 est un organigramme des traitements à mettre en oeuvre pour caractériser la posture du robot dans un ensemble de positions possibles ;
- La figure 11 est un organigramme des traitements à mettre en oeuvre pour gérer la posture du robot de manière à minimiser les conséquences d'une chute dans plusieurs modes de réalisation de l'invention ;
- La figure 12 illustre le principe de détermination des modalités de choix des actions à mettre en oeuvre pour minimiser les conséquences d'une chute dans plusieurs modes de réalisation de l'invention ;
- Les figures 13a, 13b et 13c sont des exemples de postures choisies pour minimiser les conséquences d'une chute dans plusieurs modes de réalisation de l'invention ;
- La figure 14 est un schéma d'une architecture physique et fonctionnelle permettant la mise en oeuvre de l'invention dans plusieurs de ses modes de réalisation.

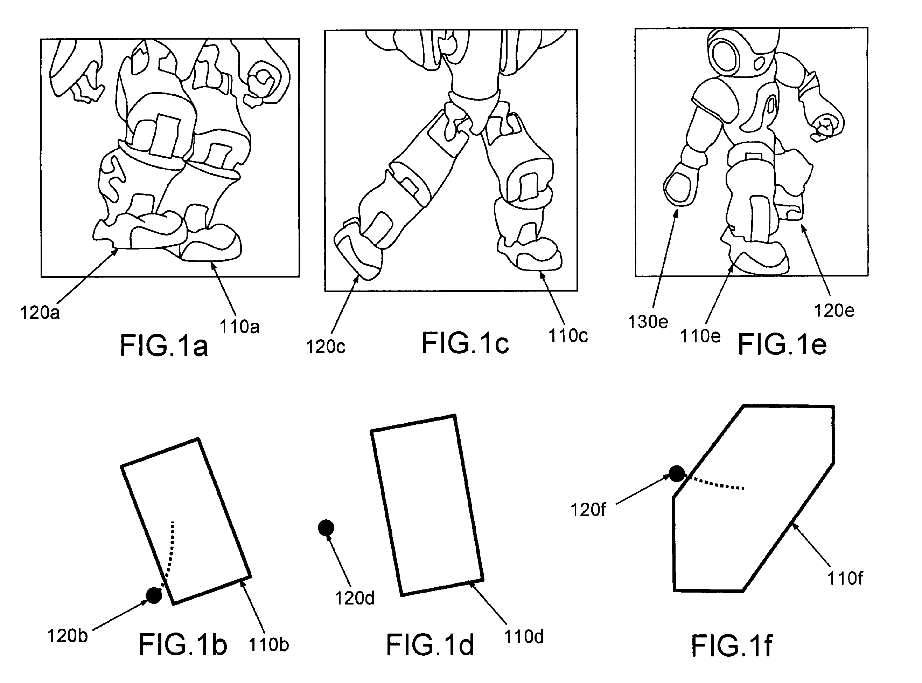

Les figures 1a, 1b, 1c, 1d, 1e et 1f illustrent le principe de calcul de prédiction des chutes d'un robot selon l'art antérieur.

La stabilité d'un solide posé sur le sol est classiquement déterminée par la position de la projection de son centre de masse sur le sol par rapport à son polygone de sustentation sur le sol.

Dans le cas d'un robot humanoïde doté de pieds se tenant debout, comme illustré par les figures 1a, 1c et 1e, le polygone de sustentation est déterminé par la réunion des surfaces des soles des pieds et de la surface interpodale. Les polygones de sustentation correspondant aux postures des robots illustrés sur les figures 1a, 1c et 1e sont respectivement illustrés par les figures 1b, 1d et 1f. Dans ces trois cas, caractérisés par le fait que l'un des pieds du robot n'est pas en contact complet avec la surface de progression du robot, est illustré un des problèmes de la solution de l'art antérieur : le polygone de sustentation est réduit à la surface de la sole d'un des pieds du robot, le deuxième pied étant en mouvement. Dans le cas des figures 1a et 1b, le robot marche : le pied 110a est posé sur le sol mais le pied 120a est en suspension avant de se reposer sur le sol. Si la position des pieds par rapport au sol est classiquement déterminée par des capteurs de pression positionnés sur la sole des pieds du robot, le polygone de sustentation, 110b, est réduit à la sole du pied 110a, qui est la seule à être en contact avec le sol. La marche est un phénomène dynamique qui garantit que le ZMP soit toujours dans le polygone de sustentation du robot, mais la marche ne garantit pas que le centre de masse soit dans cedit polygone. Par exemple, le centre de masse du robot peut se projeter au point, 120b, qui se situe à l'extérieur du polygone 110b. Si la détection d'une chute est simplement asservie sur le positionnement relatif du point 120b à l'extérieur du polygone 110b, le mécanisme de gestion des chutes pourra se déclencher à chaque pas et le robot ne pourra pas marcher.

La projection du centre de masse 120d, 120f sera aussi à l'extérieur du polygone de sustentation 110d, 110f dans les cas illustrés par les figures 1c, 1d, 1e et 1f. En effet, dans ces cas, le robot a une posture dans laquelle un des pieds 120c n'est pas en contact avec le sol et les capteurs de pression de ce pied délivrent une information d'absence de contact avec le sol, car la totalité des capteurs n'est pas en contact avec le sol, même si le pied est partiellement en contact, ce qui déclenchera une détection de chute.

4

Dans le cas illustré sur les figures 1e et 1f, NAO est en train de s'asseoir. Les deux pieds sont bien en contact avec le sol et le robot va basculer/chuter vers l'arrière mais cette chute est volontaire et la main droite, 130e, va venir freiner cette chute et garantir que le robot ne chute pas complètement. Dans ces trois cas donc, une détection de chute sera déclenchée de manière intempestive.

La présente invention résout cet inconvénient de l'art antérieur.

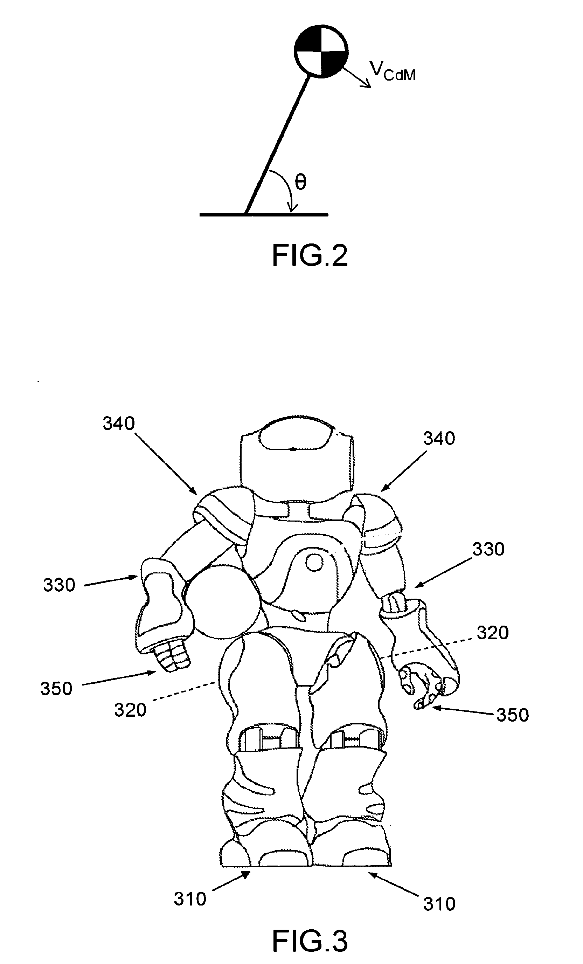

La figure 2 est un schéma de principe du calcul d'un mode de gestion des chutes d'un robot selon l'art antérieur.

Selon l'art antérieur, une fois qu'une condition de chute est détectée selon le principe décrit ci-dessus en commentaire aux figures 1a à 1f, sont mises en oeuvre des stratégies de gestion de chute dans le but de minimiser les dommages éventuels au robot, notamment en protégeant ses parties sensibles, qui peuvent être différentes selon sa structure.

Des mécanismes de gestion de chutes de l'art antérieur sont décrits dans Fujiwara et alii, "Falling Motion Control to Minimize Damage to Biped Humanoïd Robot" et « The First Human-size Humanoïd that can Fall Over Safely and Stand-up Again », Proceedings of the IEEE/RSJ, Intl. Conference on Intelligent Robots and Systems, EPFL, Lausanne, Switzerland, October 2002 et Las Vegas, Nevada, October 2003. Ces mécanismes utilisent les mesures de l'inclinaison $\theta$ de l'axe vertical du robot par rapport à la verticale par rapport au sol et de la vitesse $V_{CdM}$ du centre de masse du robot pour prédire la partie du robot qui touchera le sol la première. Ces mesures sont effectuées de manière dynamique en modélisant les mouvements du robot par un pendule inverse oscillant par rapport à la verticale au sol. Les calculs à effectuer sont particulièrement gourmands en puissance de calcul, ce qui limite la possibilité de les utiliser dans des robots dont les capacités de calcul sont affectées de manière privilégiée soit à des tâches permanentes, telles que la gestion des mouvements des articulations et des capteurs d'environnement, soit à des tâches d'usage, telles que la gestion de la parole et des comportements.

La présente invention permet de s'affranchir de cette limitation.

La figure 3 illustre l'architecture physique d'un robot humanoïde dans un mode de réalisation de l'invention. Un tel robot a été divulgué notamment dans la demande de brevet WO2009/124951 publiée le 15/10/2009. Cette plateforme a servi de base aux améliorations qui ont conduit à la présente invention. Dans la suite de la description, ce robot humanoïde peut être indifféremment désigné sous cette appellation générique ou sous sa marque commerciale NAO™, sans que la généralité de la référence en soit modifiée. Ce robot comprend environ deux douzaines de cartes électroniques de commande de capteurs et d'actionneurs qui pilotent les articulations. Une articulation a normalement au moins deux degrés de liberté et donc deux moteurs. Chaque moteur est piloté en angle. L'articulation comporte également plusieurs capteurs de position, notamment des MRE (Magnetic Rotary Encoder). La carte électronique de contrôle comporte un microcontrôleur du commerce. Ce peut être par exemple un DSPIC™ de la société Microchip. C'est un MCU 16 bits couplé à un DSP. Ce MCU a un cycle d'asservissement en boucle d'une ms. Le robot peut également comporter d'autres types d'actionneurs, notamment des LED (Diodes électroluminescentes) dont la couleur et l'intensité peuvent traduire les émotions du robot. Celui-ci peut également comporter d'autres types de capteurs de position, notamment une centrale inertielle, des FSR (Capteurs de pression au sol). Ces FSR, 310, sont particulièrement utiles à la mise en oeuvre de la présente invention. Ils sont destinés dans ce cadre à détecter le contact de chacun des pieds avec le sol ou toute autre surface de progression du robot. On peut utiliser dans ce but, par exemple, des capteurs de marque FlexiForce™ de la société Tekscan™ qui sont constitués par un ruban à au moins deux couches en matériau flexible piézo-résistif. La résistance électrique du ruban diminue en fonction de la force de pression verticale appliquée à la surface sur laquelle est disposé le ruban. La mesure du courant permet de déterminer la force de pression après calibration. Plusieurs capteurs, par exemple quatre, sont avantageusement prévus sur la sole de chaque pied.

La tête comporte l'intelligence du robot, notamment la carte qui exécute les fonctions de haut niveau qui permettent au robot d'accomplir les missions qui lui sont assignées. Le processeur de la carte peut être un processeur x86 du commerce. On choisira de manière privilégiée un processeur à basse consommation tel que le Geode™ de la société AMD (32 bits, 500 MHz). La carte comporte également un ensemble de mémoires RAM et flash. Cette carte gère également les communications du robot avec l'extérieur (serveur de comportements, autres robots...), normalement sur une couche de transmission WiFi, WiMax, éventuellement sur un réseau public de communications mobiles de données avec des protocoles standards éventuellement encapsulés dans un VPN. Le processeur est normalement piloté par un OS standard ce qui permet d'utiliser les langages de haut niveau usuels (C, C++, Python, ...) ou les langages spécifiques de l'intelligence artificielle comme URBI (langage de programmation spécialisé dans la robotique) pour la programmation des fonctions de haut niveau.

Une autre carte est logée dans le tronc du robot. C'est là que se situe le calculateur qui assure la transmission aux cartes de contrôle des articulations des ordres calculés par la carte de la tête. Le calculateur de cette carte est également un processeur du commerce. Ce peut avantageusement être un processeur 32 bits du type ARM 9™ cadencé à 100 MHz. Le type du processeur, sa position centrale, proche du bouton de marche/arrêt, sa liaison au contrôle de l'alimentation en font un outil bien adapté pour la gestion de l'alimentation du robot (mode veille, arrêt d'urgence, ...). La carte comporte également un ensemble de mémoires RAM et flash.

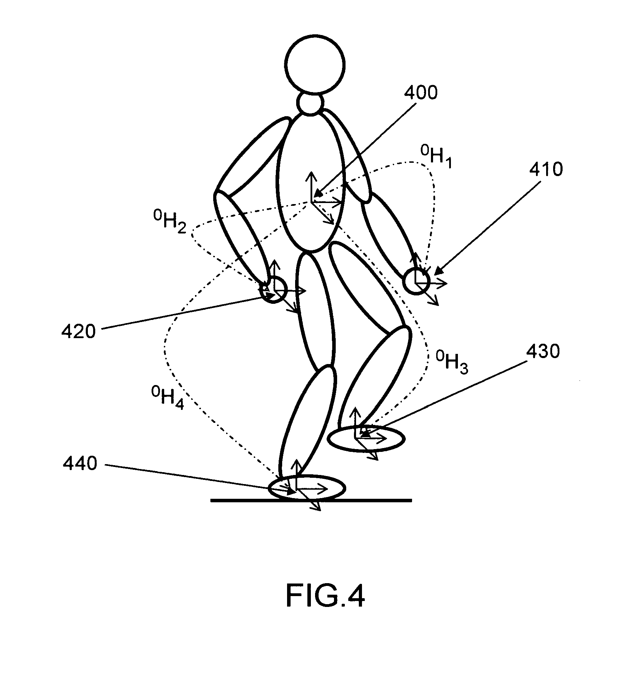

Comme expliqué ci-dessous en commentaire à la figure 4, il est possible de calculer la position de points caractéristiques du robot, appelés effecteurs, dans un repère du robot. Ces effecteurs peuvent par exemple être des points du postérieur du robot, 320, les articulations des coudes, 330, les articulations des épaules, 340, ou les articulations des doigts, 350. De ce fait, les calculs de ce modèle géométrique direct peuvent être utilisés comme moyen de détection de la proximité du sol desdits effecteurs, en choisissant un seuil en fonction de la morphologie du robot.

La figure 4 illustre un modèle géométrique direct utilisé pour calculer la position dans plusieurs repères du robot de points caractéristiques du robot dans plusieurs modes de réalisation de l'invention.

A un instant donné, les angles de chacune des articulations du robot sont connus du système central du robot. En conséquence, la position relative de chaque articulation par rapport à toutes les autres peut être facilement calculée, puisqu'il s'agit en fait d'une chaîne articulée dont tous les degrés de libertés sont déterminés et connus. Pour calculer facilement la position d'un point b dans le repère d'un autre point a, on utilise des matrices de taille 4x4 dites matrices de transformation homogène du type $^aH_b$ qui sont composées d'une matrice de rotation de taille 3x3 et d'une matrice de translation de taille 3x1. Les matrices de transformation homogène ont en particulier les propriétés suivantes :

- Elles sont inversibles, et $^aH_b$ $^{-1}$ est égale à $^bH_a$;
- $^aH_b$ x $^bH_c$ = $^aH_c$

On utilise généralement le repère du torse, 400, comme repère principal du robot. Les positions des mains gauche et droite (respectivement 410, 420) et des pieds gauche et droit (respectivement 430, 440) dans ce repère sont données par les matrices $^0H_1$, $^0H_2$, $^0H_3$, $^0H_4$. Les angles de rotation sont donnés par les angles des moteurs des articulations et les distances de translation par les distances inter-articulations.

Pour calculer la position de la main gauche 410 par rapport au sol, c'est-à-dire dans la configuration de la figure 4, par rapport au pied droit 440, il faut donc calculer la matrice $^4H_1$. En appliquant les formules ci-dessus, on déduit par une inversion et une multiplication matricielles que :

$$^4H_1 = {^0H_4}^{-1} \times {^0H_1}.$$

Cette méthode peut être utilisée pour calculer la position de tout point du robot dans un repère absolu, en particulier de tout effecteur tels que ceux positionnés sur la figure 3 aux références 320 (fesses), 330 (coudes), 340 (épaules) et 350 (doigts).

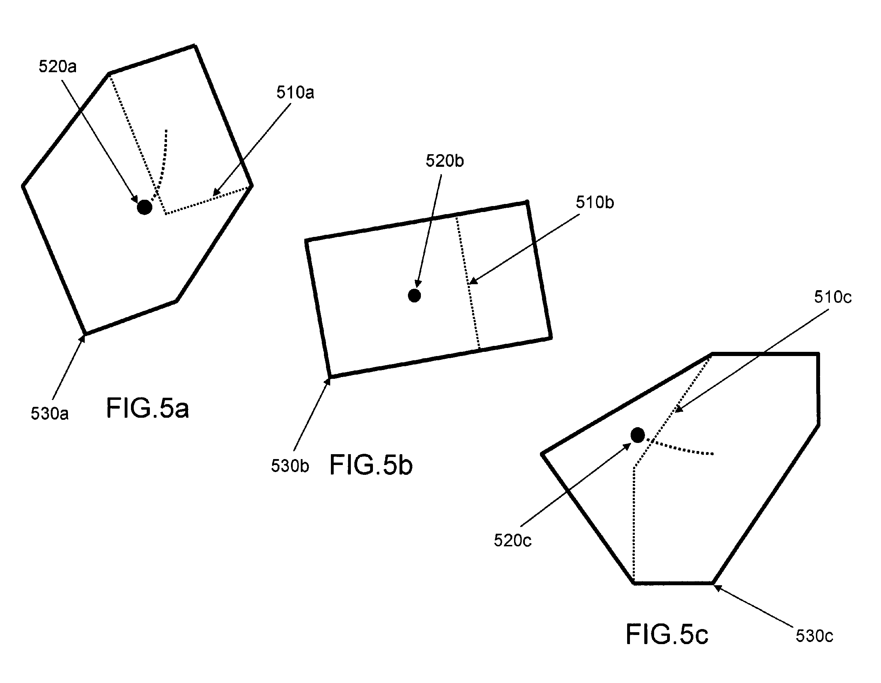

Les figures 5a, 5b et 5c illustrent le principe de calcul de prédiction des chutes d'un robot dans plusieurs modes de réalisation de l'invention.

Le principe de l'invention consiste à calculer un polygone de sustentation virtuel ou projeté tenant compte d'effecteurs proches du sol qui pourront donc normalement assurer la stabilité du robot.

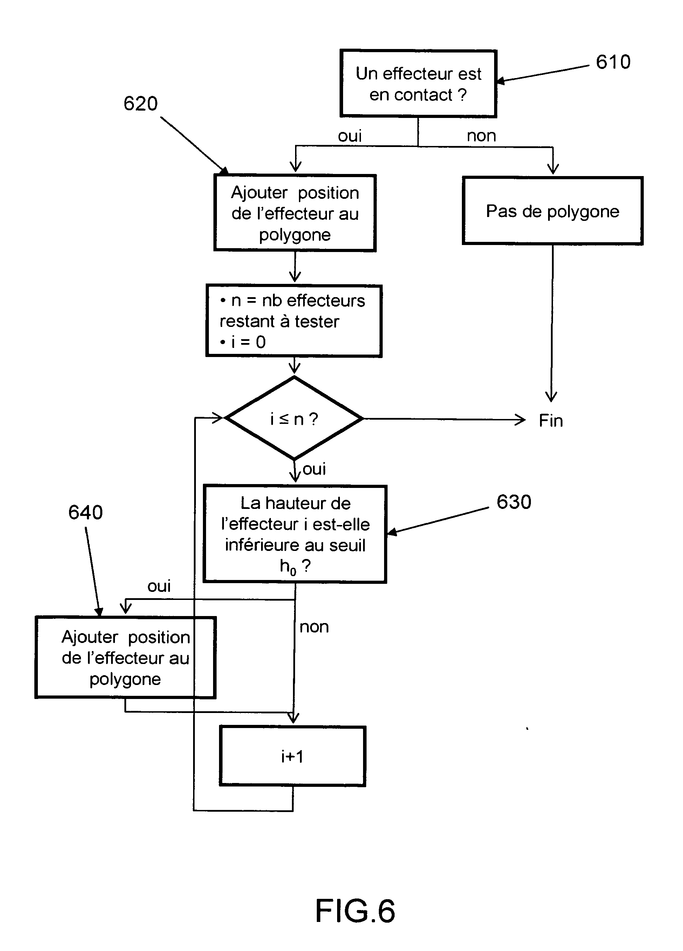

Les polygones 510a, 510b et 510c correspondent respectivement aux polygones 110b, 110d et 110f des figures 1b, 1d et 1f. Par les moyens explicités ci-dessous en commentaire à la figure 6, on détermine que le deuxième pied 120a, 120c dont les capteurs de force de pression ont indiqué qu'il n'était pas en position de contact avec le sol, et la main 130e étaient en réalité à proximité de celui-ci, le seuil de proximité pertinent pouvant être réglé à une valeur qui dépendra de la morphologie du robot. Cette valeur de seuil peut par exemple être de 4 à 5 cm dans le cas du robot NAO dont la hauteur est de l'ordre de 60 cm. Dans le cas d'un robot plus grand, cette valeur de seuil sera augmentée. De même, la dynamique des pas du robot en hauteur (par exemple sa capacité à monter un escalier) doit également être prise en compte. La surface de ce deuxième pied est ajoutée au polygone de sustentation précédemment déterminé pour donner un nouveau polygone de sustentation 530a, 530b, 530c, dit « virtuel », dans la mesure où il n'est pas le polygone réel correspondant à la réalité physique de l'instant.

Les centres de masse 520a, 520b, 520c se situent désormais dans chaque cas à l'intérieur du polygone de sustentation virtuel et l'algorithme de détection de chute détermine qu'il n'y a pas lieu de déclencher le mécanisme de gestion des chutes, alors que l'algorithme de l'art antérieur l'aurait déclenché, comme indiqué en commentaire aux figures 1a à 1 f.

La figure 6 est un organigramme des traitements à mettre en oeuvre pour déterminer un polygone de sustentation virtuel du robot dans plusieurs modes de réalisation de l'invention.

Selon l'organigramme représenté sur la figure 6, on peut généraliser les cas représentés sur les figures 5a à 5c à un type quelconque d'effecteur pour initialiser le calcul du polygone de sustentation à l'étape 610, à la condition que la position de stabilité statique sur un effecteur corresponde à une réalité physique. On peut ainsi imaginer que le robot marche sur les mains...Les capteurs de force de pression 310 permettront de répondre à la question « Un effecteur est en contact ? ». Ces capteurs de force de pression peuvent être remplacés par tout moyen de valider le contact de l'effecteur avec la surface de progression du robot. Une fois un premier polygone calculé (étape 620), on peut également généraliser les cas représentés sur les figures 5a à 5c à un nombre quelconque n-1 d'effecteurs complémentaires pour compléter le polygone de sustentation. On teste systématiquement l'autre pied et les deux mains. On peut également décider d'ajouter le postérieur, les coudes et les épaules. Le test 630 (« La hauteur de l'effecteur i est-elle inférieure au seuil $h_0$ ? » fait appel aux calculs par géométrie directe de la position de chaque effecteur, la position trouvée étant déclarée proche du sol en deçà d'un seuil fixé comme indiqué plus haut. Si le test est positif, l'effecteur i est ajouté au polygone (étape 640). Les calculs se poursuivent jusqu'à épuisement des effecteurs présélectionnés.

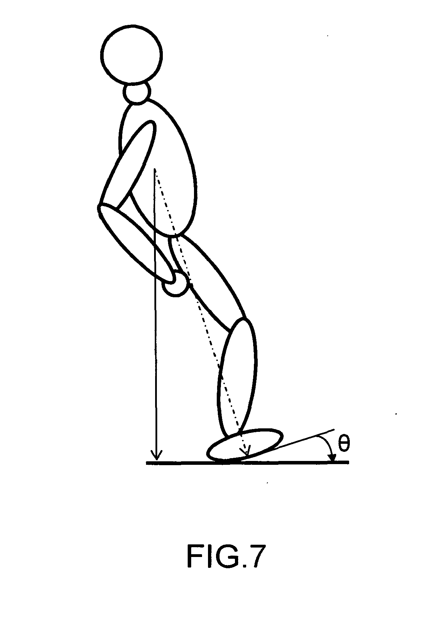

La figure 7 illustre la posture d'un robot humanoïde qui doit être prise en compte pour déterminer de manière pertinente la projection du centre de masse d'un robot humanoïde sur son plan de progression dans plusieurs modes de réalisation de l'invention.

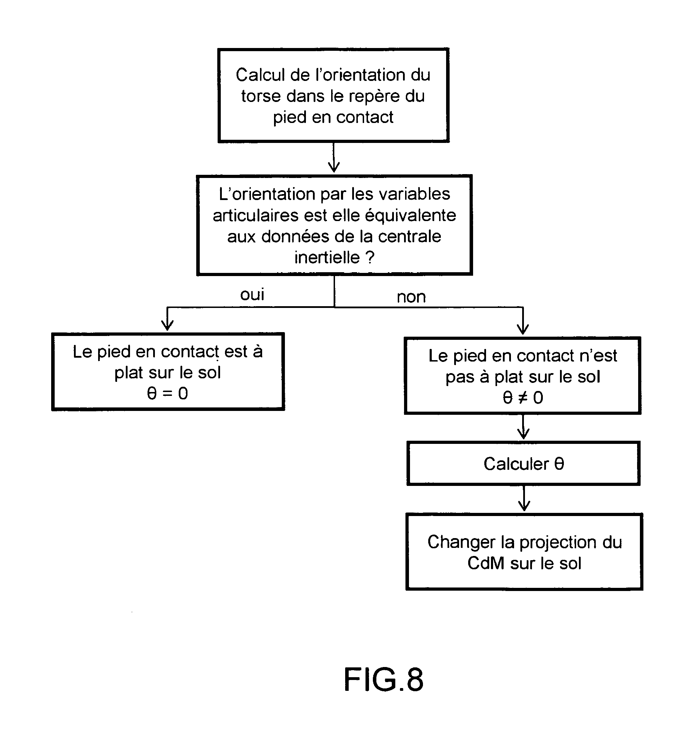

On note sur la figure que les pieds du robot n'étant pas posés à plat sur le sol et faisant un angle θ avec celui-ci, il n'est pas possible de considérer la perpendiculaire aux pieds comme la projection du centre de masse. L'orientation du robot donnée par les variables articulaires ne sera alors pas correcte. Il faut donc la corriger. On va pour ce faire inclure dans le calcul les données de la centrale inertielle, comme explicité ci-dessous en commentaire à la figure 8.

La figure 8 est un organigramme des traitements à mettre en oeuvre pour déterminer la projection du centre de masse d'un robot humanoïde sur son plan de progression dans plusieurs modes de réalisation de l'invention.

L'algorithme consiste à recaler l'orientation du torse sur les mesures de position de la centrale inertielle. La centrale inertielle délivre deux angles de rotation à partir de la mesure de 3 accéléromètres et de 2 gyroscopes. La centrale est elle-même recalée en permanence. S'il y a un décalage entre les deux mesures, on conclue que le pied forme un angle θ non nul avec le sol et on calcule θ qui est égal à l'angle que fait l'axe pied-torse avec la verticale donnée par la centrale.

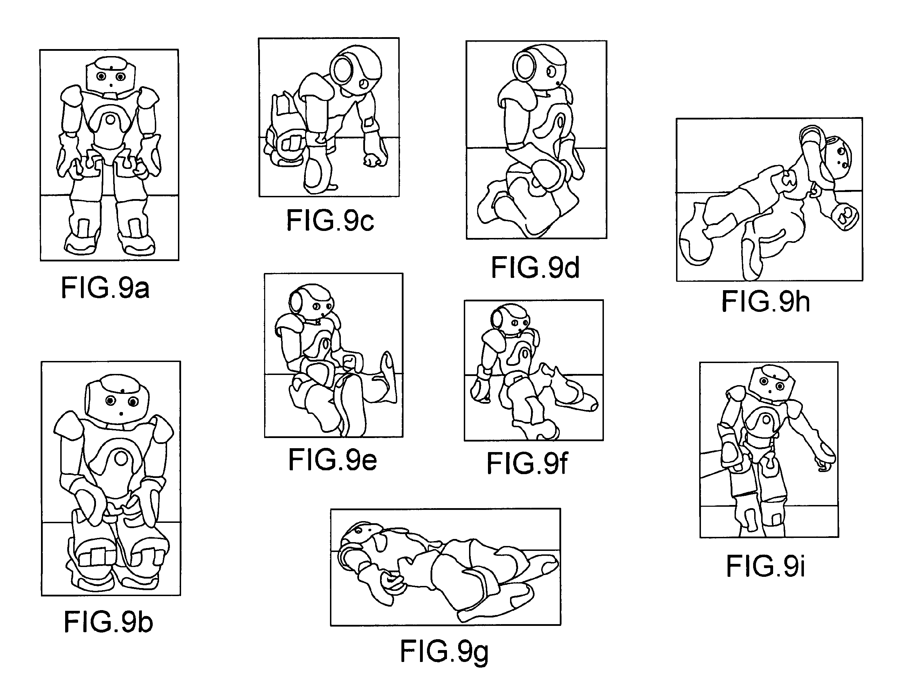

Les figures 9a à 9i illustrent plusieurs postures du robot qui peuvent être filtrées avant de détecter les conditions de réalisation d'une chute du robot dans plusieurs modes de réalisation de l'invention.

On a vu ci-dessus en commentaire à la figure 6 qu'il était possible d'ajouter plusieurs effecteurs de manière à déterminer le polygone de sustentation virtuel correspondant le mieux à la posture réelle du robot. Cependant, le fait de rajouter un nombre élevé d'effecteurs va ralentir le processus de détection de chute. Il peut donc être avantageux de réaliser un filtrage préalable desdites postures pour extraire celles pour lesquelles il est nécessaire de réaliser une détection de chute et celles pour lesquelles il n'est pas nécessaire de réaliser ladite détection. On peut aussi imaginer qu'en fonction du type de posture reconnu on détermine le ou les effecteurs qui seront testés pour effectuer le calcul de détection.

Les figures 9a et 9b illustrent respectivement les postures « debout » et « accroupi » auxquelles il est nécessaire d'appliquer le mécanisme de détection de chute.

Les figures 9c à 9i illustrent respectivement les postures « grenouille », « à genou », « assis bras devant», « assis bras derrière », « allongé sur le dos », « allongé de côté » et « inconnu ». Dans la posture 9i, le robot est tenu par un tiers et aucun de ses effecteurs ne touche le sol. Dans ces cas 9c à 9i, on ne réalise pas le calcul de détection de chute.

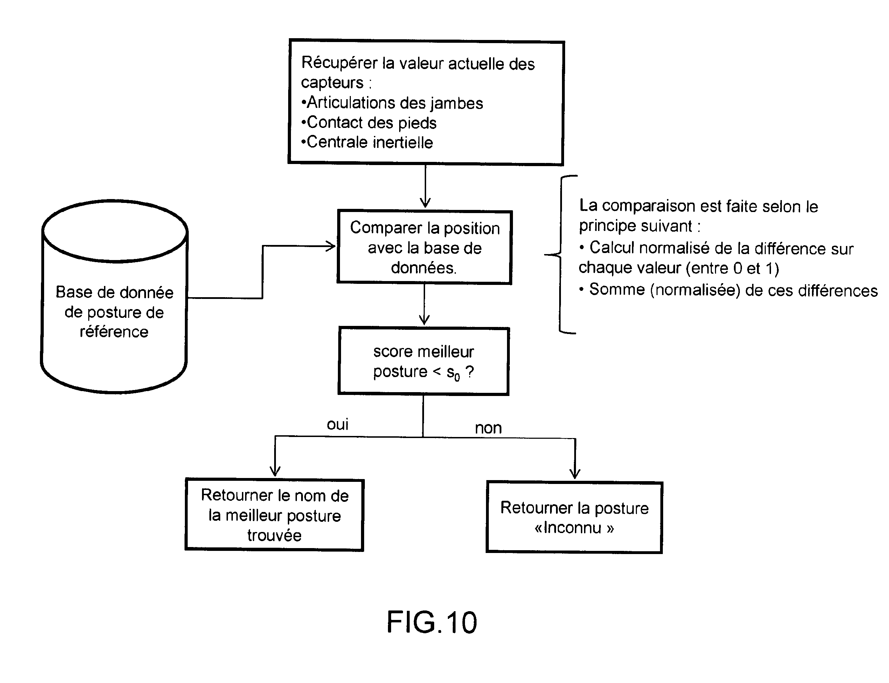

La figure 10 est un organigramme des traitements à mettre en oeuvre pour caractériser la posture du robot dans un ensemble de positions possibles.

Le filtrage des postures du robot est réalisé en utilisant les valeurs des angles des articulations, les sorties des capteurs de contact des pieds et les mesures de la centrale inertielle. Les données de la posture à filtrer sont comparées à celles des postures de référence stockées dans une base de données. On utilise pour cette comparaison un principe de minimisation de distance (par exemple, somme des différences relatives de chaque donnée filtrée par rapport à la donnée de référence correspondante). On compare la mesure de distance selon ce critère à un seuil fixé en fonction du nombre de données et en fonction des résultats de l'expérience.

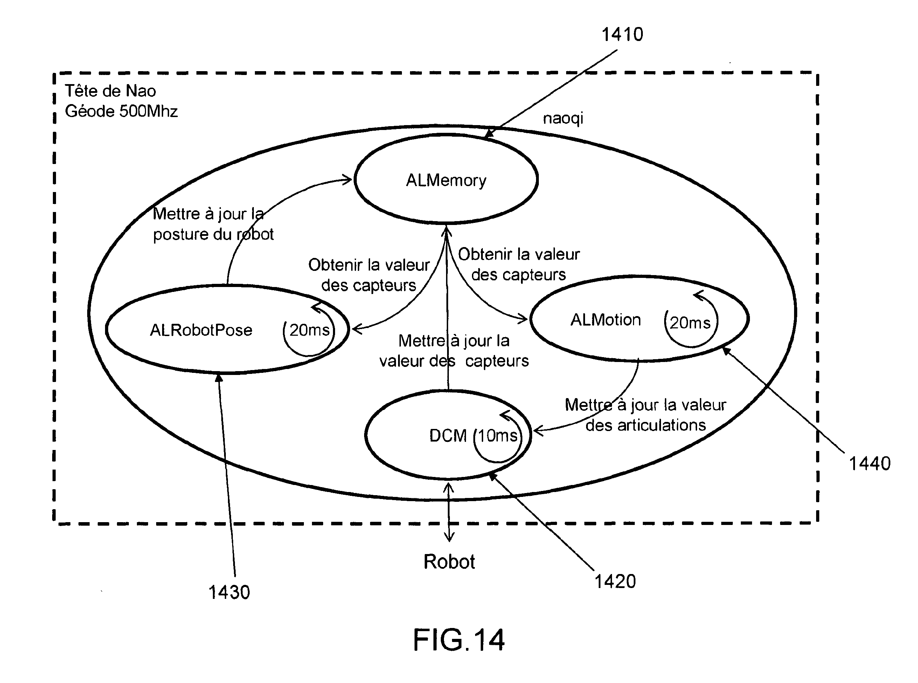

Cette fonction est mise en oeuvre par le module ALRobotPose dans l'exemple d'architecture de mise en oeuvre représenté sur la figure 14 commentée plus loin dans la description.

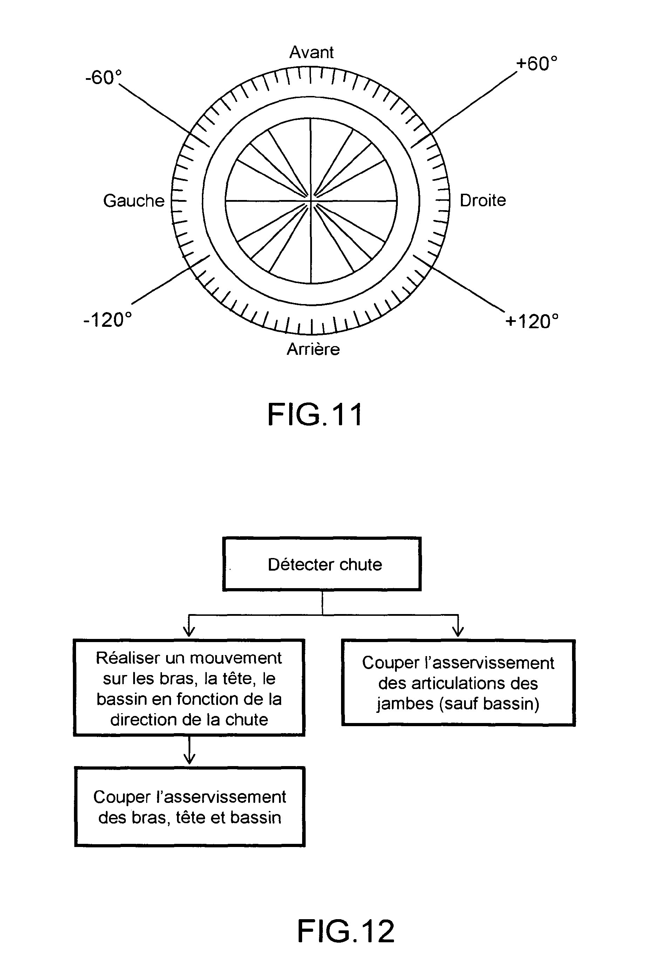

La figure 11 est un organigramme des traitements à mettre en oeuvre pour gérer la posture du robot de manière à minimiser les conséquences d'une chute dans plusieurs modes de réalisation de l'invention.

Lorsqu'une situation de chute est détectée par les moyens indiqués ci-dessus en commentaire à la figure 6, on met en oeuvre des moyens de protection des zones sensibles du robot, notamment la tête, qui comprend le processeur et des capteurs fragiles, et le bassin qui comporte normalement des articulations complexes et également fragiles.

On va en particulier en parallèle supprimer l'asservissement des articulations des jambes (pas celles du bassin) et effectuer un mouvement de protection qui dépendra de l'angle de chute déterminé comme indiqué ci-dessous en commentaire à la figure 12. Une fois ce mouvement de protection effectué, on supprime également les asservissements des articulations des bras, de la tête et du bassin. Ces actions doivent pouvoir être effectuées très rapidement et constituer de véritables réflexes du robot.

La figure 12 illustre le principe de détermination des modalités de choix des actions à mettre en oeuvre pour minimiser les conséquences d'une chute dans plusieurs modes de réalisation de l'invention.

Lorsqu'une situation de chute est détectée par les moyens indiqués ci-dessus en commentaire à la figure 6, on détermine l'angle de la chute dans le plan du sol. Pour ce faire, on dispose d'un repère sur le sol (appelé SPACE_NAO). Il s'agit d'un repère dit égocentrique qui se caractérise par le fait que l'axe x est toujours orienté dans le sens du robot (vers l'avant) donc en sachant où sort le centre de masse du robot dans ce repère, on déduit l'angle de sortie par simple géométrie. On compte les angles par rapport à l'axe de progression du robot, positivement dans le sens des aiguilles d'une montre. Entre -60° et +60°, on considère que la chute a lieu vers l'avant ; entre +60° ° et +120°, vers la droite ; entre +120° et -120°, vers l'arrière ; entre -120° et -60°, vers la gauche.

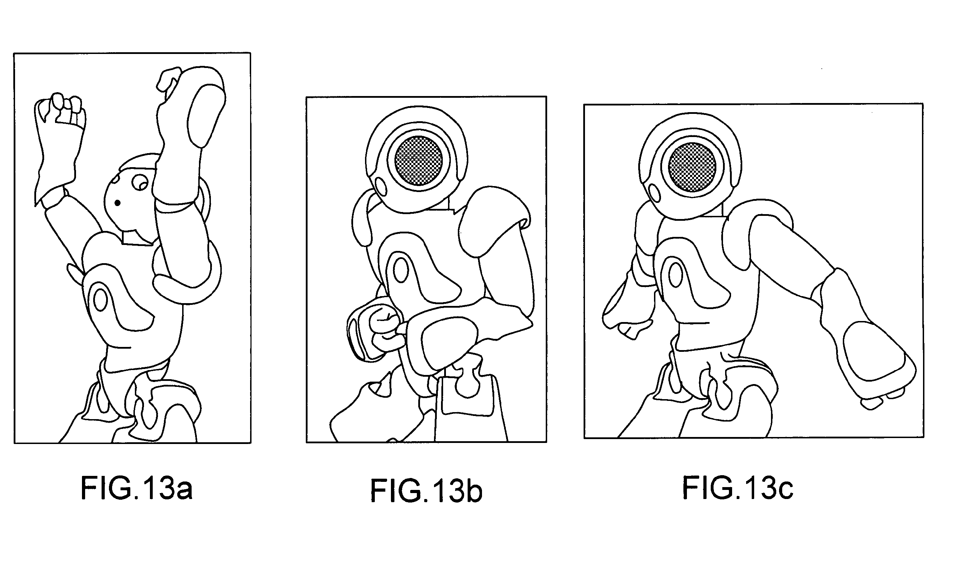

Du point de vue du choix des stratégies de protection, les secteurs droite et gauche sont équivalents. Dans le cadre du mode de réalisation illustré sur cette figure, l'angle de chute permet donc de déterminer trois secteurs qui conduisent au choix de trois stratégies différentes expliquées ci-dessous en commentaire aux figures 13a à 13c. On pourrait cependant déterminer plus de trois secteurs et donc plus de trois stratégies de protection. Le principe de l'invention est de ne pas chercher à calculer précisément une posture de chute fonction d'une dynamique de chute calculée avec précision, par exemple par application du modèle du pendule inverse comme expliqué en commentaire à la figure 2. Il s'agit plutôt de choisir entre quelques types de stratégies de protection qui sont définis en fonction de classes de risque qui dépendent des pièces sensibles du robot et de la manière dont la direction de chute va les affecter. On constate par exemple que le fait de générer des actions des jambes du robot, comme dans l'art antérieur, peut augmenter l'impact au sol, car le mouvement génère une inertie importante. Ainsi, la coupure des asservissements des articulations du robot permet au robot de tomber de son propre poids et donc de ne pas augmenter la vitesse de chute et l'impact.

Les figures 13a, 13b et 13c sont des exemples de postures choisies pour minimiser les conséquences d'une chute dans plusieurs modes de réalisation de l'invention.

La figure 13a illustre les cas de chute vers l'avant ; dans ces cas, les gestes de protection consistent par exemple à :

- protéger la tête en la plaçant vers l'arrière ;
- ramener les bras vers l'avant de manière à amortir la chute et protéger la tête ;
- fermer le bassin pour regrouper les jambes du robot.

La figure 13b illustre les cas de chute vers la droite ou vers la gauche ; dans ces cas, les gestes de protection consistent par exemple à :

- protéger la tête en la plaçant dans une posture qui tient compte de ses extensions éventuelles, par exemple vers l'avant sur la droite (si présence d'un câble Ethernet, par exemple...) ;
- regrouper les bras vers le corps ;
- ouvrir le bassin de manière à faire tourner le robot pour que le premier point d'impact avec le sol soit le dos et pas le bassin ;

La figure 13c illustre les cas de chute vers l'arrière ; dans ces cas, les gestes de protection consistent par exemple à :

- protéger la tête en la plaçant dans une posture qui tient compte de ses extensions éventuelles, par exemple vers l'avant sur la droite (si présence d'un câble Ethernet, par exemple...) ;
- ramener les bras vers l'arrière afin de bloquer le robot ; ce mouvement est destiné à empêcher le robot de rouler sur le dos et de se casser le cou ;
- fermer le bassin pour regrouper les jambes du robot.

La figure 14 est un schéma d'une architecture physique et fonctionnelle permettant la mise en oeuvre de l'invention dans plusieurs de ses modes de réalisation.

Un robot tel que NAO est avantageusement doté de logiciels de haut niveau permettant le pilotage des fonctions du robot dans un mode de réalisation de l'invention. Une architecture logicielle de ce type, dénommée NAOQI, a été divulguée notamment dans la demande de brevet WO2009/124955 publiée le 15/10/2009. Elle comporte les fonctions de base de gestion des communications entre un robot et un PC ou un site distant et d'échange de logiciels qui fournissent l'infrastructure logicielle nécessaire à la mise en oeuvre de la présente invention.

NAOQI est un framework optimisé pour les applications robotiques ; il supporte plusieurs langages, notamment C++, Python et Urbi.

Dans le cadre de la présente invention, sont particulièrement utiles les modules de NAOQI suivants :

- le module ALMemory, 1410, gère une mémoire partagée entre les différents modules de NAOQI ;
- le module DCM, 1420, gère les communications avec le robot physique (moteurs, capteurs) ;
- le module ALRobotPose, 1430, calcule la posture actuelle du robot par comparaison aux postures de référence ; le module ALMotion, 1440, gère les mouvements du robot ; c'est dans ce module que sont implantées les fonctions de détection et de gestion des chutes de la présente invention (« Fall manager »).

Ces quatre modules sont avantageusement codés en C++. La figure indique également les flots de données entre modules.

En particulier, les entrées nécessaires à la mise en oeuvre des fonctions Fall manager sont :

- les valeurs des capteurs (capteurs de force de pression des pieds, centrale inertielle par exemple) ;
- la posture du robot.

En cas de détection de chute, les fonctions Fall manager envoient des commandes de mise à jour des articulations, notamment pour effectuer les mouvements réflexe de protection et désactiver les articulations.

Sont également indiqués sur la figure, à titre purement illustratif, des valeurs des cycles de rafraîchissement des données traitées par chaque module : 20 ms pour la mise à jour de la posture du robot et les données de gestion des chutes ; 10 ms pour les valeurs des capteurs.

Les fonctions de Fall Manager peuvent être déclenchées par le mauvais fonctionnement de certains capteurs, par exemple les capteurs MRE. Dans ce cas, des mouvements erratiques d'une ou plusieurs articulations vont se produire et si la panne entraîne une sortie du centre de masse du polygone de sustentation virtuel, la mise en position de protection sera déclenchée. Le Fall Manager complète donc les fonctions de gestion des pannes du robot.

Les exemples décrits ci-dessus sont donnés à titre d'illustration de modes de réalisation de l'invention. Ils ne limitent en aucune manière le champ de l'invention qui est défini par les revendications qui suivent.


**Revendications**

**1.** Robot humanoïde apte à se déplacer sur une surface comprenant au moins un module de détection du contact d'au moins une première extrémité du robot (110a, 110b, 110c) avec ladite surface et un module de calcul de la position (120b, 120d, 120f) du point de projection du centre de masse dudit robot par rapport à un premier polygone de sustentation (110b, 110d, 110f) constitué au moins par ladite au moins une première extrémité, ledit robot étant **caractérisé en ce qu'**il comprend en outre au moins un module de détection de la proximité d'au moins une deuxième extrémité (120a, 120b, 120c, 320, 330, 340, 350) dudit robot avec ladite surface, et **en ce que** ledit module de calcul de la position du point de projection du centre de masse dudit robot par rapport à un premier polygone de sustentation est également apte à calculer la position de la projection du centre de masse dudit robot par rapport à un deuxième polygone de sustentation (530a, 530b, 530c), ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

**2.** Robot humanoïde selon la revendication 1, **caractérisé en ce que** le module de détection de la proximité de ladite au moins une deuxième extrémité avec ladite surface reçoit en entrée la position de ladite au moins une deuxième extrémité par rapport à ladite surface, ladite position étant fournie en sortie d'un modèle géométrique du robot comprenant au moins la position dans l'espace de ladite extrémité dans un repère du robot.

**3.** Robot humanoïde selon la revendication 2, **caractérisé en ce que** la condition selon laquelle une deuxième extrémité du robot est presqu'en contact avec ladite surface est **caractérisée par** un seuil de distance choisi en fonction de critères appartenant à un groupe de critères comprenant au moins la taille du robot et le débattement maximal en hauteur de ses membres inférieurs.

**4.** Robot humanoïde selon l'une des revendications 1 à 3, **caractérisé en ce que** ladite au moins une première extrémité est un des pieds du robot, ledit pied étant doté d'au moins un capteur de force de pression.

**5.** Robot humanoïde selon l'une des revendications 1 à 4, **caractérisé en ce que** ladite au moins une deuxième extrémité est une des mains du robot.

**6.** Robot humanoïde selon l'une des revendications 1 à 5, **caractérisé en ce qu'**il comprend en outre, en entrée dudit module de calcul de la position du point de projection du centre de masse dudit robot par rapport à un polygone de sustentation, un module de filtrage des postures du robot par comparaison selon un critère prédéfini de distance entre leurs modèles géométriques et les modèles géométriques de postures de référence.

**7.** Robot humanoïde selon l'une des revendications 1 à 6, **caractérisé en ce qu'**il comprend en outre une centrale inertielle qui fournit au module de calcul de la position du point de projection du centre de masse dudit robot un axe vertical dont l'angle avec l'axe reliant le thorax et un des pieds du robot en contact avec le sol fournit un angle de rotation à appliquer à l'axe de projection du centre de masse du robot.

**8.** Robot humanoïde selon l'une des revendications 1 à 6, **caractérisé en ce qu'**il comprend en outre, en sortie dudit module de calcul de la position du point de projection du centre de masse dudit robot par rapport à un polygone de sustentation, un module de contrôle d'un groupe d'actions de protection contre les chutes, une au moins desdites actions étant déclenchée lorsque ledit module de calcul fournit au moins une sortie caractéristique d'un état de chute du robot dans lequel le point du projection de son centre de masse est extérieur au deuxième polygone de sustentation.

**9.** Robot humanoïde selon la revendication 8, **caractérisé en ce que** le groupe d'actions de protection comprend au moins la coupure de l'asservissement des articulations des jambes du robot, la mise en posture de protection d'au moins un élément appartenant au groupe comprenant au moins la tête, les bras et le bassin, la coupure des articulations d'au moins un élément appartenant audit groupe.

10. Robot humanoïde selon l'une des revendications 8 à 9, **caractérisé en ce que** ledit module de calcul fournit en outre au module de contrôle du groupe d'actions de protection contre les chutes, pour un état caractéristique d'un état de chute du robot, un angle caractéristique de la direction de chute dans un repère du robot, la valeur dudit angle de chute par rapport à des valeurs de référence choisies déterminant le choix des actions de protection du groupe d'actions de protection contre les chutes à exécuter.

11. Robot humanoïde selon l'une des revendications 9 à 10, **caractérisé en ce que**, lorsque l'angle de chute détermine une chute vers l'avant, la mise en posture de protection de la tête est de la placer sensiblement vers l'arrière, la mise en posture de protection des bras est de les placer sensiblement vers l'avant et la mise en posture de protection du bassin est de le fermer.

12. Robot humanoïde selon l'une des revendications 9 à 10, **caractérisé en ce que**, lorsque l'angle de chute détermine une chute vers la gauche ou la droite, la mise en posture de protection de la tête est de la placer sensiblement vers l'avant, la mise en posture de protection des bras est de les regrouper sensiblement vers le corps et la mise en posture de protection du bassin est de l'ouvrir.

13. Robot humanoïde selon l'une des revendications 9 à 10, **caractérisé en ce que**, lorsque l'angle de chute détermine une chute vers l'arrière, la mise en posture de protection de la tête est de la placer sensiblement vers l'avant, la mise en posture de protection des bras est de les ramener sensiblement vers l'arrière et la mise en posture de protection du bassin est de le fermer.

14. Procédé de gestion des chutes d'un robot humanoïde apte à se déplacer sur une surface et comprenant au moins un module de détection du contact d'au moins une première extrémité du robot avec ladite surface, ledit procédé comprenant une étape de calcul de la position du point de projection du centre de masse dudit robot par rapport à un premier polygone de sustentation constitué au moins par ladite au moins une première extrémité et étant **caractérisé en ce qu'**il comprend en outre au moins une étape de détection de la proximité d'au moins une deuxième extrémité dudit robot avec ladite surface et une étape de calcul de la position de la projection du centre de masse dudit robot par rapport à un deuxième polygone de sustentation, ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

15. Programme d'ordinateur comprenant des instructions de code de programme permettant l'exécution du procédé selon la revendication 14 lorsque le programme est exécuté sur un ordinateur, ledit programme étant adapté pour permettre la gestion des chutes d'un robot humanoïde apte à se déplacer sur une surface et comprenant au moins un module de détection du contact d'au moins une première extrémité du robot avec ladite surface, ledit programme comprenant un module de calcul de la position du point de projection du centre de masse dudit robot par rapport à un premier polygone de sustentation et étant **caractérisé en ce qu'**il comprend en outre au moins un module d'entrée de données de détection de la proximité d'au moins une deuxième extrémité dudit robot avec ladite surface et un module de calcul de la position de la projection du centre de masse dudit robot par rapport à un deuxième polygone de sustentation, ledit deuxième polygone étant déduit du premier polygone en ajoutant à celui-ci les points de projection sur ladite surface desdites deuxièmes extrémités dudit robot appartenant au groupe des extrémités détectées comme presqu'en contact avec ladite surface.

**Patentansprüche**

1. Humanoider Roboter, der sich auf einer Oberfläche bewegen kann und wenigstens ein Modul zum Erkennen des Kontakts von wenigstens einem ersten Ende (110a, 110b, 110c) des Roboters mit der Oberfläche und ein Modul zum Berechnen der Position (120b, 120d, 120f) des Projektionspunkts des Massenschwerpunkts des Roboters relativ zu einem ersten Unterstützungspolygon (110b, 110d, 110f) umfasst, die wenigstens durch das wenigstens eine erste Ende gebildet wird, wobei der Roboter **dadurch gekennzeichnet ist, dass** er ferner wenigstens ein Modul zum Erkennen der Nähe von wenigstens einem zweiten Ende (120a, 120b, 120c, 320, 330, 340, 350) des Roboters zu der Oberfläche umfasst, und dadurch, dass das Modul zum Berechnen der Position des Projektionspunkts des Massenschwerpunkts des Roboters relativ zu einem ersten Unterstützungspolygon auch die Position der Projektion des Massenschwerpunkts des Roboters relativ zu einem zweiten Unterstützungspolygon (530a, 530b, 530c) berechnen kann, wobei das zweite Polygon von dem ersten Polygon durch Addieren der Projektionspunkte auf der Oberfläche der zweiten Enden des Roboters zu dem ersten Polygon abgeleitet wird, die zu der Gruppe von Enden gehören, die als fast mit der Oberfläche in Kontakt erkannt wurden.

2. Humanoider Roboter nach Anspruch 1, **dadurch gekennzeichnet, dass** das Modul zum Erkennen der Nähe des wenigstens einen zweiten Endes zur Oberfläche am Eingang die Position des wenigstens einen zweiten Endes relativ zu der Oberfläche empfängt, wobei diese Position am Ausgang eines geometrischen Modells des Roboters bereitgestellt wird und wenigstens die Position des Endes in einem Referenzrahmen des Roboters im Raum beinhaltet.

3. Humanoider Roboter nach Anspruch 2, **dadurch gekennzeichnet, dass** die Bedingung, gemäß der ein zweites Ende des Roboters fast mit der Oberfläche in Kontakt ist, durch eine Distanzschwelle gekennzeichnet ist, die in Abhängigkeit von Kriterien gewählt wird, die zu einer Gruppe von Kriterien gehören, die wenigstens die Größe des Roboters und die maximale Höhenbewegung seiner unteren Gliedmaßen beinhalten.

4. Humanoider Roboter nach einem der Ansprüche 1 bis 3, **dadurch gekennzeichnet, dass** das wenigstens eine erste Ende einer der Füße des Roboters ist, wobei dieser Fuß mit wenigstens einem Druckkraftsensor versehen sind.

5. Humanoider Roboter nach einem der Ansprüche 1 bis 4, **dadurch gekennzeichnet, dass** das wenigstens eine zweite Ende eine der Hände des Roboters ist.

6. Humanoider Roboter nach einem der Ansprüche 1 bis 5, **dadurch gekennzeichnet, dass** er ferner am Eingang des Moduls zum Berechnen der Position des Projektionspunkts des Massenschwerpunkts des Roboters relativ zu einem Unterstützungspolygon ein Modul zum Filtern von Haltungen des Roboters durch Vergleichen, gemäß einem vordefinierten Distanzkriterium, zwischen ihren geometrischen Modellen und den geometrischen Modellen von Referenzhaltungen umfasst.

7. Humanoider Roboter nach einem der Ansprüche 1 bis 6, **dadurch gekennzeichnet, dass** er ferner eine Trägheitseinheit umfasst, die dem Modul zum Berechnen der Position des Projektionspunkts des Massenschwerpunkts des Roboters eine vertikale Achse bereitstellt, deren Winkel mit der Achse, die den Thorax und einen der Füße des Roboters in Kontakt mit dem Boden verbindet, einen auf die Projektionsachse des Massenschwerpunkts des Roboters anzuwendenden Rotationswinkel ergibt.

8. Humanoider Roboter nach einem der Ansprüche 1 bis 6, **dadurch gekennzeichnet, dass** er ferner am Ausgang des Moduls zum Berechnen der Position des Projektionspunkts des Massenschwerpunkts des Roboters relativ zu einem Unterstützungspolygon ein Modul zum Steuern einer Aktionsgruppe zum Schutz gegen einen Sturz umfasst, wobei wenigstens eine der Aktionen dann ausgelöst wird, wenn das Berechnungsmodul wenigstens einen Ausgang bereitstellt, der für einen Sturzzustand des Roboters charakteristisch ist, in dem der Projektionspunkt seines Massenschwerpunkts außerhalb des zweiten Unterstützungspolygons liegt.

9. Humanoider Roboter nach Anspruch 8, **dadurch gekennzeichnet, dass** die Gruppe von Schutzaktionen wenigstens das Stoppen der Servosteuerung der Beingelenke des Roboters, das Platzieren von wenigstens einem Element, das zu der Gruppe gehört, die wenigstens den Kopf, die Arme und das Becken umfasst, in einer Schutzhaltung, das Stoppen der Gelenke von wenigstens einem zu der Gruppe gehörenden Element beinhaltet.

10. Humanoider Roboter nach einem der Ansprüche 8 bis 9, **dadurch gekennzeichnet, dass** das Berechnungsmodul dem Modul zum Steuern der Aktionsgruppe zum Schutz gegen einen Sturz, für einen Zustand, der für einen Sturzzustand des Roboters charakteristisch ist, ferner einen Winkel gibt, der für die Sturzrichtung in einem Referenzrahmen des Roboters charakteristisch ist, wobei der Wert des Sturzwinkels relativ zu den gewählten Referenzwerten die Wahl der Schutzaktionen aus der Aktionsgruppe zum Schutz gegen einen Sturz bestimmt.

11. Humanoider Roboter nach einem der Ansprüche 9 bis 10, **dadurch gekennzeichnet, dass**, wenn der Sturzwinkel einen Sturz nach vorne bestimmt, das Platzieren des Kopfes in einer Schutzhaltung das Platzieren des Kopfes im Wesentlichen nach hinten beinhaltet, das Platzieren der Arme in einer Schutzhaltung das Platzieren derselben im Wesentlichen nach vorne beinhaltet und das Platzieren des Beckens in einer Schutzhaltung das Schließen des Beckens beinhaltet.

12. Humanoider Roboter nach einem der Ansprüche 9 bis 10, **dadurch gekennzeichnet, dass**, wenn der Sturzwinkel einen Sturz nach links oder nach rechts bestimmt, das Platzieren des Kopfes in eine Schutzhaltung das Platzieren des Kopfes im Wesentlichen nach vorne beinhaltet, das Platzieren der Arme in einer Schutzhaltung das Gruppieren der Arme im Wesentlichen am Körper beinhaltet und das Platzieren des Beckens in einer Schutzhaltung das Öffnen des Beckens beinhaltet.

13. Humanoider Roboter nach einem der Ansprüche 9 bis 10, **dadurch gekennzeichnet, dass**, wenn der Sturzwinkel einen Sturz nach hinten bestimmt, das Platzieren des Kopfes in einer Schutzhaltung das Platzieren des Kopfes im Wesentlichen nach vorne beinhaltet, das Platzieren der Arme in einer Schutzhaltung im Wesentlichen das Bringen derselben im Wesentlichen nach hinten beinhaltet und das Platzieren des Beckens in einer Schutzhaltung im Wesentlichen das Schließen des Bekkens beinhaltet.

14. Verfahren zum Lenken des Sturzes eines humanoiden Roboters, der sich auf einer Oberfläche bewegen kann und wenigstens ein Modul zum Erkennen des Kontakts von wenigstens einem ersten Ende des Roboters mit der Oberfläche umfasst, wobei das Verfahren einen Schritt des Berechnens der Position des Projektionspunkts des Massenschwerpunkts des Roboters relativ zu einem ersten Unterstützungspolygon beinhaltet, die wenigstens durch das wenigstens eine erste Ende gebildet wird und **dadurch gekennzeichnet ist, dass** er ferner wenigstens einen Schritt des Erkennens der Nähe von wenigstens einem zweiten Ende des Roboters zu der Oberfläche und einen Schritt des Berechnens der Position der Projektion des Massenschwerpunkts des Roboters relativ zu einem zweiten Unterstützungspolygon beinhaltet, wobei das zweite Polygon von dem ersten Polygon durch Addieren der Projektionspunkte auf der Oberfläche der zweiten Enden des Roboters zu dem ersten Polygon abgeleitet wird, die zu der Gruppe der Enden gehören, die als mit der Oberfläche fast in Kontakt erkannt werden.

15. Computerprogramm, das Programmcode-Befehle umfasst, die die Ausführung des Verfahrens nach Anspruch 14 zulassen, wenn das Programm auf einem Computer ausgeführt wird, wobei das Programm so ausgelegt ist, dass der Sturz eines humanoiden Roboters gelenkt werden kann, der sich auf einer Oberfläche bewegen kann und wenigstens ein Modul zum Erkennen des Kontakts von wenigstens einem ersten Ende des Roboters mit der Oberfläche umfasst, wobei das Programm ein Modul zum Berechnen der Position des Projektionspunkts des Massenschwerpunkts des Roboters relativ zu einem ersten Unterstützungspolygon beinhaltet und **dadurch gekennzeichnet ist, dass** es ferner wenigstens ein Modul zum Eingeben von Daten zum Erkennen der Nähe von wenigstens einem zweiten Ende des Roboters zu der Oberfläche und ein Modul zum Berechnen der Position der Projektion des Massenschwerpunkts des Roboters relativ zu einem zweiten Unterstützungspolygon beinhaltet, wobei das zweite Polygon von dem ersten Polygon durch Addieren der Projektionspunkte auf der Oberfläche der zweiten Enden des Roboters zu dem ersten Polygon abgeleitet wird, die zu der Gruppe von Enden gehören, die als mit der Oberfläche fast in Kontakt erkannt werden.

**Claims**

1. A humanoid robot designed to move on a surface comprising at least one module for detecting the contact of at least one first end (110a, 110b, 110c) of said robot with said surface and a module for calculating the position (120b, 120d, 120f) of the point of projection of the centre of mass of said robot relative to a first lift polygon (110b, 110d, 110f) at least constituted by said at least one first end, said robot being **characterised in that** it further comprises at least one module for detecting the proximity of at least one second end (120a, 120b, 120c, 320, 330, 340, 350) of said robot with said surface, and **in that** said module for calculating the position of the point of projection of the centre of mass of said robot relative to a first lift polygon is also designed to calculate the position of the projection of the centre of mass of said robot relative to a second lift polygon (530a, 530b, 530c), said second polygon being deduced from the first polygon by adding to said first polygon the points of projection on said surface of said second ends of said robot, which belong to the group of ends detected as being in near contact with said surface.

2. The humanoid robot according to claim 1, **characterised in that** said module for detecting the proximity of said at least one second end with said surface receives as input the position of said at least one second end relative to said surface, said position being provided as output of a geometric model of said robot, which comprises at least the position in space of said end in a reference frame of said robot.

3. The humanoid robot according to claim 2, **characterised in that** the condition by which a second end of said robot is in near contact with said surface is **characterised by** a distance threshold selected as a function of criteria belonging to a group of criteria comprising at least the size of said robot and the maximum upwards movement of its lower members.

4. The humanoid robot according to any one of claims 1 to 3, **characterised in that** said at least one first end is one of the feet of said robot, said foot being provided with at least one pressure force sensor.

5. The humanoid robot according to any one of claims 1 to 4, **characterised in that** said at least one second end is one of the hands of said robot.

6. The humanoid robot according to any one of claims 1 to 5, **characterised in that** it further comprises, as input for said module for calculating the position of the point of projection of the centre of mass of said robot relative to a lift polygon, a module for filtering postures of said robot by comparing, according to a predefined distance criterion, between their geometric models and the geometric models of reference postures.

7. The humanoid robot according to any one of claims 1 to 6, **characterised in that** it further comprises an inertial unit that provides the module for calculating the position of the point of projection of the centre of mass of said robot with a vertical axis, for which the angle with the axis connecting the thorax and one of the feet of said robot in contact with the ground provides an angle of rotation to be applied to the axis of projection of the centre of mass of said robot.

8. The humanoid robot according to any one of claims 1 to 6, **characterised in that** it further comprises, as output from said module for calculating the position of the point of projection of the centre of mass of said robot relative to a lift polygon, a module for controlling a group of actions for protecting against falls, with at least one of said actions being triggered when said calculation module provides at least one output characteristic of a fall state of said robot, in which the point of projection of its centre of mass is outside of the second lift polygon.

9. The humanoid robot according to claim 8, **characterised in that** the group of protection actions comprises at least the cut-off of the servo-control of the joints of the legs of said robot, placing at least one element belonging to the group comprising at least the head, the arms and the pelvis in a protection posture, the cut-off of the joints of at least one element belonging to said group.

10. The humanoid robot according to any one of claims 8 to 9, **characterised in that** said calculation module further provides the module for controlling the group of actions for protecting against falls, in a state that is characteristic of a fall state of said robot, with an angle that is characteristic of the fall direction in a robot reference frame, with the value of said fall angle relative to selected reference values determining the selection to be made of the protection actions from the group of actions for protecting against falls.

11. The humanoid robot according to any one of claims 9 to 10, **characterised in that**, when the fall angle determines a fall forwards, placing the head in a protection posture comprises placing the head substantially backwards, placing the arms in a protection posture comprises placing them substantially forwards and placing the pelvis in a protection posture comprises closing the pelvis.

12. The humanoid robot according to any one of claims 9 to 10, **characterised in that**, when the fall angle determines a fall to the left or to the right, placing the head in a protection posture comprises placing the head substantially forwards, placing the arms in a protection posture comprises substantially grouping them toward the body and placing the pelvis in a protection posture comprises opening the pelvis.

13. The humanoid robot according to any one of claims 9 to 10, **characterised in that**, when the fall angle determines a fall backwards, placing the head in a protection posture comprises placing the head substantially forwards, placing the arms in a protection posture comprises placing them substantially backwards and placing the pelvis in a protection posture comprises closing the pelvis.

14. A method for managing the falls of a humanoid robot designed to move on a surface and comprising at least one module for detecting the contact of at least one first end of said robot with said surface, said method comprising a step of calculating the position of said point of projection of the centre of mass of said robot relative to a first lift polygon at least constituted by said at least one first end and being **characterised in that** it further comprises at least one step of detecting the proximity of at least one second end of said robot with said surface and a step of calculating the position of the projection of the centre of mass of said robot relative to a second lift polygon, with said second polygon being deduced from the first polygon by adding to said first polygon the points of projection on said surface of said second ends of said robot, which belong to the group of ends detected as being in near contact with said surface.

15. A computer program comprising program code instructions allowing the execution of the method according to claim 14 when the program is executed on a computer, said program being designed to manage the falls of a humanoid robot designed to move on a surface and comprising at least one module for detecting the contact of at least one first end of said robot with said surface, said program comprising a module for calculating the position of the point of projection of the centre of mass of said robot relative to a first lift polygon and being **characterised in that** it further comprises at least one module for inputting data for detecting the proximity of at least one second end of said robot with said surface and a module for calculating the position of the projection of the centre of mass of said robot relative to a second lift polygon, said second polygon being deduced from the first polygon by adding to said first polygon the points of projection on said surface of said second ends of said robot, which belong to the group of ends detected as being in near contact with said surface.

FIG.1a

120a    110a

FIG.1c

120c    110c

FIG.1e

130e   110e   120e

FIG.1b

120b    110b

FIG.1d

120d    110d

FIG.1f

120f    110f

EP 2 608 997 B1

V<sub>CdM</sub>

θ

## FIG.2

340

340

330

330

320

350

320

350

310

310

## FIG.3

FIG.4

520a

510a

530a  FIG.5a

520b

510b

530b  FIG.5b

510c

520c

FIG.5c

530c

Un effecteur est
en contact ? — 610

oui                                    non

620

Ajouter position
de l'effecteur au
polygone

Pas de polygone

• n = nb effecteurs
restant à tester
• i = 0

i ≤ n ?                                    Fin

oui

La hauteur de
l'effecteur i est-elle
inférieure au seuil
$h_0$ ? — 630

640

oui

Ajouter position
de l'effecteur au
polygone

non

i+1

# FIG.6

FIG.7

Calcul de l'orientation du
torse dans le repère du
pied en contact

⬇

L'orientation par les variables
articulaires est elle équivalente
aux données de la centrale
inertielle ?

oui          non

Le pied en contact est à
plat sur le sol
$\theta = 0$

Le pied en contact n'est
pas à plat sur le sol
$\theta \neq 0$

⬇

Calculer $\theta$

⬇

Changer la projection du
CdM sur le sol

# FIG.8

FIG.9h

FIG.9i

FIG.9d

FIG.9f

FIG.9g

FIG.9c

FIG.9e

FIG.9a

FIG.9b

Récupérer la valeur actuelle des
capteurs :
•Articulations des jambes
•Contact des pieds
•Centrale inertielle

La comparaison est faite selon le
principe suivant :
• Calcul normalisé de la différence sur
chaque valeur (entre 0 et 1)
• Somme (normalisée) de ces différences

Comparer la position
avec la base de
données.

Base de donnée
de posture de
référence

score meilleur
posture < $s_0$ ?

oui

non

Retourner le nom de
la meilleur posture
trouvée

Retourner la posture
«Inconnu »

FIG.10

Avant

-60°

+60°

Gauche

Droite

-120°

+120°

Arrière

# FIG.11

Détecter chute

Réaliser un mouvement
sur les bras, la tête, le
bassin en fonction de la
direction de la chute

Couper l'asservissement
des articulations des
jambes (sauf bassin)

Couper l'asservissement
des bras, tête et bassin

# FIG.12

FIG.13c

FIG.13b

FIG.13a

FIG.14

EP 2 608 997 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009124951 A

- WO 2009124955 A

**Littérature non-brevet citée dans la description**

- **FUJIWARA et al.** Falling Motion Control to Minimize Damage to Biped Humanoïd Robot'' et « The First Human-size Humanoïd that can Fall Over Safely and Stand-up Again. *Proceedings of the IEEE/RSJ, Intl. Conference on Intelligent Robots and Systems,* Octobre 2002